# EUROPEAN PATENT SPECIFICATION

(11) **EP 4 397 416 B1**
(45) Date of publication and mention of the grant of the patent: **25.03.2026**
(21) Application number: 23754100.8
(22) Date of filing: 04.01.2023
(51) Int. Cl.: B05C 5/02, B05C 13/02, H01M 4/04, B05C 11/10

(54) **COATING APPARATUS**
BESCHICHTUNGSVORRICHTUNG
APPAREIL DE REVÊTEMENT

(30) Priority: 21.11.2022 CN 202223079806 U
(43) Date of publication of application: 10.07.2024
(73) Proprietor: Contemporary Amperex Technology (Hong Kong) Limited, Central, Central And Western District (HK)
(72) Inventor: LIU, Xuyong, Ningde Fujian 352100 (CN); SHANG, Hongwu, Ningde Fujian 352100 (CN)
(74) Representative: Gong, Jinping
(86) International application number: PCT/CN2023/070528
(87) International publication number: WO 2024/108741

(56) References cited:
- CN-A- 112 916 326
- CN-U- 206 731 444
- CN-U- 206 731 444
- CN-U- 212 681 501
- CN-U- 213 792 486
- CN-U- 215 141 487
- CN-U- 215 141 487
- CN-U- 216 323 035
- CN-U- 216 988 369
- JP-A- 2006 088 000
- JP-A- 2014 151 301

## Description

This application claims priority to Chinese Patent No. 202223079806.3, filed with the China National Intellectual Property Administration (CNIPA) on November 21, 2022.

### TECHNICAL FIELD

This application relates to the technical field of batteries, and in particular, to a coating equipment as specified in any of claims 1-7.

### BACKGROUND

Batteries are widely applied to various kinds of electrical equipment, such as music players, video cameras, portable computers, and electric vehicles. A coating process is an indispensable part of the manufacturing process of batteries. Coating weight is closely related to electrical equipment. The main structural part used in the coating process includes a coating die head and a back roll, and a base material is wound on the back roll in the coating process. Due to the influence of various environmental factors, the position of the coating die head relative to the back roll often changes in the production process. How to detect the position change of the coating die head relative to the back roll is an urgent problem to be solved. CN 206731444 U and CN 215141487 U, disclose coating devices with sensor-based alignment and gap adjustment functionalities.

### SUMMARY

The claimed subject-matter is defined by the appended claims. This application provides coating equipment, which can solve the problem of poor coating stability caused by the fact that a gap and a parallelism of a coating die head relative to a back roll exceed specifications.

The coating equipment according to embodiments of this application includes:
a back roll;
a coating die head, having a coating opening facing towards the back roll, the coating opening extending in an axial direction of the back roll; and
a detection assembly, configured to detect a position of the coating die head relative to the back roll and including a level mounted on the coating die head. The detection assembly includes two range finders. The range finders are configured to detect a parallelism between a center line of the coating opening and a central axis of the back roll. The range finders are arranged on the coating die head, and the range finders determines the parallelism by detecting a distance between the back roll and the range finders. The range finders are arranged on both end parts in a length direction of the coating die head, the level is parallel to the length direction of the coating die head, and the level is mounted on a surface in the length direction of the coating die head.

In the coating equipment provided by the embodiments of this application, through the level arranged on the detection assembly, the position change of the coating die head relative to the back roll can be detected in real time.

In this way, the range finders can indirectly obtain the parallelism of the coating equipment relative to the back roll by detecting the parallelism between the center line of the coating opening and the central axis of the back roll. Compared with a method for detecting the parallelism of other positions, this measuring method has higher accuracy, is simple and convenient to operate, and can reduce the error during measurement and improve the measurement efficiency.

In this way, the range finders can detect the parallelism of the coating die head relative to the back roll. When the parallelism is not within a tolerance range, a maintainer can perform maintenance in time, thereby ensuring the coating stability and ensuring the normal operation of production.

In some embodiments, the range finders and the level are respectively located in different directions of the coating die head.

In this way, the range finders and the level are respectively arranged in different directions of the coating die head, so that interference between the range finders and the level can be avoided, and measurement accuracy can be ensured.

In this way, the range finders are arranged on the both end parts in the length direction of the coating die head, and the level is arranged to be parallel to the length direction of the coating die head. This design makes the distance between the range finder and the level farthest and facilitates the subsequent maintenance of the range finder and the level, thereby avoiding interference between the range finder and the level and ensuring measurement accuracy.

In some embodiments, the range finders are further configured to detect a gap between the coating opening and the back roll.

In this way, the range finders detect the gap between the coating opening and the back roll. When the gap between the back roll and the coating opening exceeds the specification, a maintainer can perform maintenance in time, thereby ensuring the coating stability and ensuring the normal operation of production.

In some embodiments, the coating equipment includes an adjusting mechanism connected to the coating die head. The adjusting mechanism is configured to adjust the position of the coating die head.

In this way, when the detection assembly detects that the position of the coating die head relative to the back roll exceeds the specification, the adjusting mechanism may be configured to adjust the position of the coating die head, so that the position of the coating die head relative to the back roll returns to the specification, thereby ensuring the coating stability and ensuring the normal operation of production.

In some embodiments, the coating equipment includes a machine frame and a bearing plate. The coating die head is mounted on the bearing plate. The adjusting mechanism is mounted on the machine frame and is connected to the bearing plate. The adjusting mechanism adjusts a degree of freedom in at least one direction of the bearing plate to adjust a degree of freedom of the coating die head.

In this way, compared with the method of directly mounting the adjusting mechanism on the coating die head, the adjusting mechanism is arranged on the bearing plate, and can adjust the degree of freedom of the coating die head without changing the original structure of the coating die head.

In some embodiments, the adjusting mechanism includes at least one of a threaded piece and an automatic control system that are connected to the bearing plate.

In this way, the threaded piece may be adjusted manually and conveniently, and the manufacturing cost is low. The automatic control system may adjust the position of the coating die head in real time. The automatic control system is more efficient and can ensure the normal operation of production to the greatest extent.

The above description is merely an overview of the technical solution of this application. To make the technical means of this application more comprehensible and implemented in accordance with the content of the specification and to make the above and other objectives, features, and advantages of this application more obvious and understandable, the specific embodiments of this application are illustrated below.

### BRIEF DESCRIPTION OF DRAWINGS

With reference to detailed descriptions in preferred embodiments in the following descriptions, various other advantages and benefits become clear to a person of ordinary skills in the art. The accompanying drawings are merely used to show the preferred embodiments, and are not considered as limitations to this application. Furthermore, in all of the accompanying drawings, the same parts are represented by the same reference numerals. In the drawings:
FIG. 1 is a structural schematic diagram of coating equipment according to an embodiment of this application;
FIG. 2 is a structural schematic diagram of coating equipment according to an embodiment of this application;
FIG. 3 is a structural schematic diagram of coating equipment according to an embodiment of this application; and
FIG. 4 is a structural schematic diagram of coating equipment according to an embodiment of this application.

Description of reference numerals: coating equipment 1000; back roll 100; coating die head 200; coating opening 210; detection assembly 300; level 310; range finder 320; end part 220; side surface 230; adjusting mechanism 400; machine frame 500; bearing plate 600; threaded piece 410; automatic control system 420.

### DETAILED DESCRIPTION OF EMBODIMENTS

Embodiments of the technical solutions of this application will be described in detail below with reference to the accompanying drawings. The following embodiments are only used to more clearly describe the technical solutions of this application, and thus are merely exemplary and are not intended to limit the protection scope of this application as defined by the claims.

Unless otherwise defined, all technical and scientific terms used in this specification have the same meanings as those generally understood by persons skilled in the technical field of this application. The terms used in this specification are only intended to describe the specific embodiments and are not intended to limit this application. The terms "comprising", "having" and any variations thereof in the description, the claims, and the description of the accompanying drawings of this application are intended to cover a non-exclusive inclusion.

In the description of the embodiment of this application, the technical terms "first", "second" and the like are used only for distinguishing different objects and cannot be interpreted as an indication or implication of relative importance or an implicit indication of the number, the specific order or the primary and secondary relationship of technical features. In the description of the embodiments of this application, "a plurality of" means two or more, unless otherwise specifically defined.

"Embodiment" mentioned herein means that the specific features, structures, or characteristics described with reference to the embodiments may be included in at least one embodiment of this application. This phrase that appears in various places of the specification does not necessarily refer to the same embodiment, and is not an independent or alternative embodiment mutually exclusive with other embodiments. It is understood explicitly and implicitly by those skilled in the art that the embodiments described herein can be combined with other embodiments.

In the description of the embodiments of this application, the term "and/or" merely describes the association relationship between the associated objects and indicates that there may be three relationships. For example, A and/or B may indicate three cases where only A exists, A and B exist at the same time, or only B exists. In addition, the character "/" herein generally indicates that the associated objects are in an "or" relationship.

In the description of the embodiments of this application, the term "a plurality of" refers to more than two (including two). Similarly, "multiple groups" refers to more than two groups (including two groups), and "multiple pieces" refers to more than two pieces (including two pieces).

In the description of the embodiments of this application, a direction or a positional relationship indicated by technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like is based on that shown in the accompanying drawings, is merely to describe the embodiments of this application and simplify the description and does not indicate or imply that the indicated device or component must have a special direction or is constructed and operated in a special direction, and thus cannot be understood as a limit of this application.

In the description of the embodiments of this application, unless otherwise specified and limited, technical terms "mounting", "connecting", "connection", "fixing" and the like should be understood in a broad sense, for example, they may be fixed connection, or may be detachable connection or be integrated, or may be mechanical connection, or may be electric connection, or may be direct connection, or may be indirect connection through an intermediate medium, or may be communication between interiors of two components, or may be an interactive relationship between two components. A person of ordinary skill in the art may understand specific meanings of the above-mentioned terms in the embodiments of this application based on the specific situation.

At present, from the development of the market situation, batteries are applied more and more widely. With the diversification of use scenarios and the more precise components inside the batteries, the production process of the batteries is particularly important. The coating process has a great influence on the production of batteries.

It should be noted that in the coating process of battery production, there are the following problems: on one hand, due to the characteristics of a rotary body of the back roll, the back roll is prone to circular runout in the production process, and if the too large circular runout of the back roll cannot be found and treated in time, a gap between the coating opening of the coating die head and the back roll will be unstable, thereby leading to the large fluctuation of coating weight; and on the other hand, if the parallelism of the coating die head relative to the back roll exceeding the specification cannot be found and treated in time, the coating weight will be difficult to be adjusted to a qualified level. Due to these problems, the coating stability cannot be ensured, and a base material is prone to scratching and breakage, thereby affecting the normal production of the coating equipment.

To solve the problem of poor coating stability caused by the fact that a gap and a parallelism of a coating die head relative to a back roll exceed specifications, the inventor found that a detection assembly may be arranged in the coating equipment, and the gap and the parallelism of the coating die head relative to the back roll are detected by the detection assembly in real time, so that the circular runout of the back roll and the change of the parallelism of the coating die head relative to the back roll can be found in time, so that a maintainer can deal with the problems.

Specifically, the detection assembly may be arranged on the coating die head, thereby monitoring the parallelism and the gap of the coating die head relative to the back roll at the same time. Once the parallelism and the gap exceed the standard, the parallelism and the gap can be stabilized to a qualified level through manual adjustment or closed-loop adjustment of an automatic system, thereby avoiding the waste of resources and productivity reduction caused by operations such as downtime investigation or frequent adjustment.

In view of this, embodiments of this application provide design of coating equipment. The coating equipment may include a back roll, a coating die head, and a detection assembly. The detection assembly may be configured to detect the position of the coating die head relative to the back roll.

The coating equipment provided by the embodiments of this application may be widely applied to the production of batteries, in particular, applied to the manufacturing of base materials of the batteries.

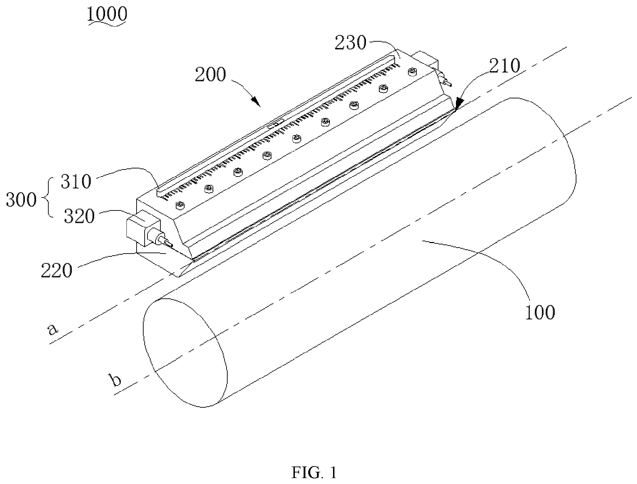

Referring to FIG. 1, FIG. 1 is a structural schematic diagram of coating equipment 1000 according to an embodiment of this application. The coating equipment 1000 provided by the embodiments of this application includes a back roll 100, a coating die head 200, and a detection assembly 300. The coating die head 200 has a coating opening 210 facing towards the back roll 100, and the coating opening 210 extends in an axial direction of the back roll 100. The detection assembly 300 is configured to detect the position of the coating die head 200 relative to the back roll 100.

The back roll 100 may be a rotatable rotary piece in the coating equipment 1000, a base material is wound on the back roll 100, and the back roll 100 in the coating equipment 1000 is configured to make the base material run stably. A structure of the back roll 100 may be symmetrical about a central axis of a cylinder, and a material of the back roll 100 may be cast steel, cast iron, and rubber, which will not be limited in the embodiments of this application.

Specifically, the coating equipment 1000 may be equipment for manufacturing a base material of a battery. The coating equipment 1000 may include a control center. The control center may be configured to receive various signals in the operation process of the coating equipment 1000 and give early waming to a maintainer or control various parts and devices in the coating equipment 1000 through closed-loop control of an automatic system.

The coating die head 200 may be a part for coating the base material in the coating equipment 1000. The coating die head 200 may be commercially available or customized. The embodiments of this application do not limit the specific model of the coating die head 200. The coating opening 210 is formed at one side, close to the back roll 100, of the coating die head 200. In the continuously running process of the base material, the coating die head 200 may continuously spray slurry through the coating opening 210 to coat the base material. The coating opening 210 may be rectangular or circular. "The coating opening 210 extends in an axial direction of the back roll 100" means that a length direction of the coating opening 210 is parallel to a central axis of the back roll 100.

The detection assembly 300 may be a device in the coating equipment 1000 for detecting the position change of the coating die head 200 and the back roll 100. A plurality of detection assemblies 300 may be provided. The plurality of detection assemblies 300 can improve the accuracy of the detection assemblies 300 and reduce measurement error. The detection assembly 300 may include a detection component, a sensor, and a structural part.

The detection component may detect the position change of the coating die head 200 and the back roll 100. The detection component may be a range finder 320 and a level 310. The embodiments of this application do not limit the type of the detection component, as long as the detection component can detect the position change of the die head and the back roll 100. The sensor may send detection and information back to the control center of the coating equipment 1000.

The structural part may be configured to mount the detection assembly 300 at other positions of the coating die head 200 or the coating equipment 1000. The detection assembly 300 may be mounted at any position, as long as the detection assembly 300 can detect the position change of the coating die head 200 and the back roll 100. The structural part may be a bracket or a sliding rail. The structural part may make the position of the detection assembly 300 changeable, thereby not affecting the operation on the coating die head 200 by a maintainer. In particular, when detecting the gap between the coating die head 200 and the back roll 100, the position-changeable detection assembly 300 may detect the gap between the coating die head 200 and the back roll 100 at different positions.

The detection assembly 300 may detect the position of the coating die head 200 relative to the back roll 100. It may be understood that many form and position tolerances, such as circular runout, parallelism, and position degree, are set between the coating die head 200 and the back roll 100. The detection assembly 300 may detect all the position changes of the coating die head 200 and the back roll 100, and feed these position changes back to the control center, so that the position change of the coating die head 200 and the back roll 100 is within the form and position tolerance, or that is, the position change of the coating die head 200 and the back roll 100 is within the specification.

In the coating equipment 1000 provided by the embodiments of this application, the level 310 arranged on the detection assembly 300 can detect the position change of the coating die head 200 relative to the back roll 100 in real time.

Continuously referring to FIG. 1, in some embodiments, the detection assembly 300 includes a level 310 mounted on the coating die head 200.

The level 310 may be commercially available or customized. The embodiments of this application do not limit the model of the level 310. Optionally, the level 310 may be mounted on a surface, different from the coating opening 210, of the coating die head 200. The level 310 may be fixed on the coating die head 200 through threaded connection, or may be movably mounted on the coating die head 200 through a structural part such as a bracket or a sliding rail. When the level 310 is movably mounted on the coating die head 200, the level 310 will not affect the operation on the coating die head 200 by the maintainer and the operation of recording data of the level 310.

In this way, the level 310 may detect the parallelism of the coating die head 200 relative to the back roll 100. When the parallelism is not within a tolerance range, a maintainer can perform maintenance in time, thereby ensuring the coating stability and ensuring the normal operation of production.

Continuously referring to FIG. 1, in some embodiments, the detection assembly 300 includes two range finders 320. The range finders 320 are configured to detect a parallelism between a center line a of the coating opening 210 and a central axis b of the back roll 100.

The range finder 320 may be commercially available or customized. The embodiments of this application do not limit the model of the range finder 320. According to the invention there are two range finders 320. In examples not according to the invention three, four or more range finders 320 may be provided. The range finders 320 measure a gap distance of the coating die head 200 at different positions relative to the back roll 100. Taking the case where the coating opening 210 is rectangular as an example, the center line a of the coating opening 210 is a center line of the rectangle parallel to the back roll 100. The parallelism is a maximum allowable error value of parallelism of the central axis b of the back roll 100 relative to the center line a of the coating opening 210.

In this way, the range finder 320 may indirectly obtain the parallelism of the coating equipment 1000 relative to the back roll 100 by detecting the parallelism between the center line of the coating opening 210 and the central axis of the back roll 100. Compared with a method for detecting the parallelism of other positions, this measuring method has higher accuracy, is simple and convenient to operate, and can reduce the error during measurement and improve the measurement efficiency.

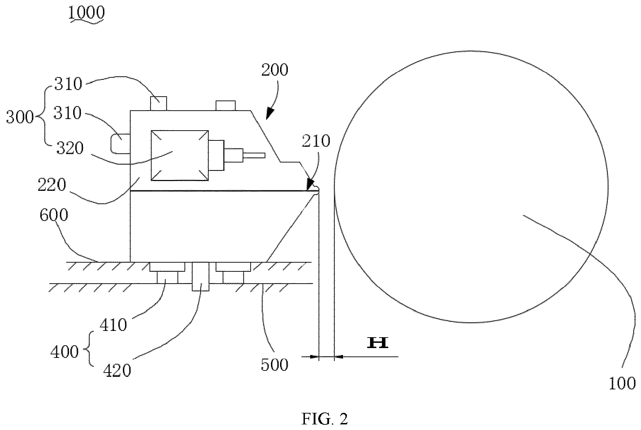

Continuously referring to FIG. 1 and FIG. 2, FIG. 2 is a structural schematic diagram of coating equipment 1000 according to an embodiment of this application. According to the invention, the range finders are arranged on the coating die head 200. The range finder 320 determines the parallelism by detecting a distance between the back roll 100 and the range finder 320.

In examples not according to the invention, the range finder 320 may be mounted on a surface, different from the coating opening 210, of the coating die head 200. The range finder 320 may be fixed on the coating die head 200 through threaded connection, or may be movably mounted on the coating die head 200 through a structural part such as a bracket or a sliding rail. When the range finder 320 is movably mounted on the coating die head 200, the range finder 320 will not affect the operation on the coating die head 200 by a maintainer and the operation of recording data of the range finder 320.

Taking two range finders 320 as according to the invention, the two range finders 320 are respectively arranged on two sides of the coating die head 200. The parallelism of the coating die head 200 relative to the back roll 100 can be obtained by comparing a distance H between the back roll 100 and the coating die head 200 measured by the two range finders 320. For example, when a given parallelism tolerance is 2 mm and if the distance H between the back roll 100 and the coating die head 200 measured by two range finders 320 is 50 mm and 50.5 mm respectively, it is considered that the parallelism of the coating die head 200 relative to the back roll 100 is within the specification; and if the distance H between the back roll 100 and the coating die head 200 measured by two range finders 320 is 50 mm and 54 mm respectively, it is considered that the parallelism of the coating die head 200 relative to the back roll 200 exceeds the specification. It should be noted that the above values are only examples for convenient understanding and cannot be regarded as limitations to the embodiments of this application.

In this way, the range finder 320 may detect the parallelism of the coating die head 200 relative to the back roll 100. When the parallelism is not within a tolerance range, a maintainer can perform maintenance in time, thereby ensuring the coating stability and ensuring the normal operation of production.

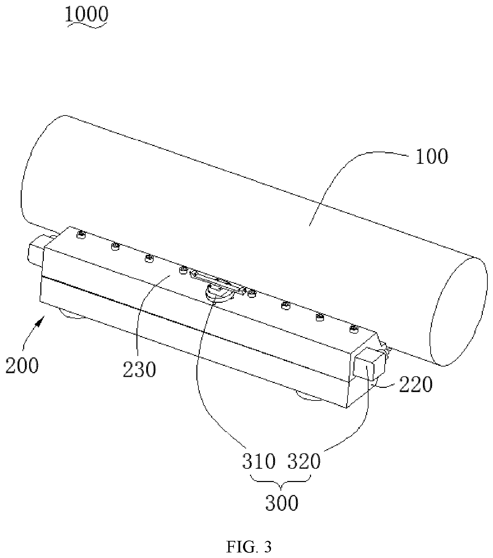

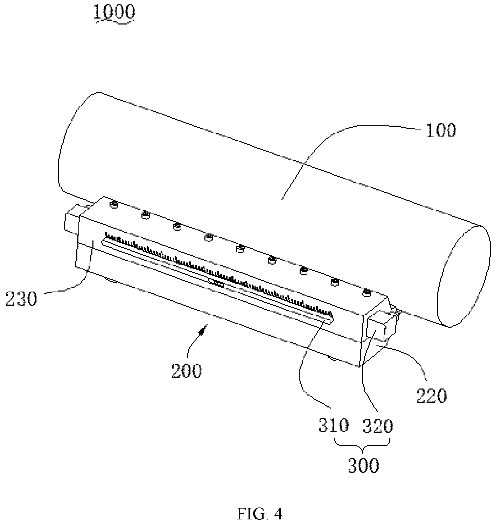

Continuously referring to FIG. 1, FIG. 3 and FIG. 4, FIG. 3 is a structural schematic diagram of coating equipment 1000 according to an embodiment of this application, and FIG. 4 is a structural schematic diagram of coating equipment 1000 according to an embodiment of this application. In some embodiments, the range finder 320 and the level 310 are respectively located in different directions of the coating die head 200.

Exemplarily, the coating die head 200 may include a front side surface, a rear side surface, a left side surface, a right side surface, an upper side surface, and a lower side surface. The front side surface may be a surface facing the back roll 100, and the coating opening 210 may be formed on the front side surface. The range finder 320 and the level 310 may be respectively on surfaces, different from the front side surface, in other directions. For example, the range finder 320 may be arranged on the left side surface, and the level 310 may be arranged on the upper side surface, which will not be specifically limited by the embodiments of this application.

In this way, the range finder 320 and the level 310 are respectively arranged in different directions of the coating die head 200, so that interference between the range finder 320 and the level 310 can be avoided, and the measurement accuracy can be ensured.

Continuously referring to FIG. 1, FIG. 3 and FIG. 4, in some embodiments, the range finder 320 is arranged on an end part 220 in a length direction of the coating die head 200, the level 310 is parallel to the length direction of the coating die head 200, and the level 310 is mounted on a surface in the length direction of the coating die head 200.

Optionally, the case where the coating die head 200 has a cuboid-like structure is taken as an example. The length direction of the coating die head 200 is a direction of an edge where a height of the cuboid is located. At this time, the range finder 320 may be arranged in a direction where a top surface and a bottom surface of the cuboid are located, and the level 310 may be arranged in a direction where a side surface 230 of the cuboid is located.

In this way, the range finder 320 is arranged on the end part 220 in the length direction of the coating die head 200, and the level 310 is set to be parallel to the length direction of the coating die head 200. This design makes the distance between the range finder 320 and the level 310 farthest and facilitates the subsequent maintenance of the range finder 320 and the level 310, thereby avoiding interference between the range finder 320 and the level 310 and ensuring measurement accuracy.

Continuously referring to FIG. 1 and FIG. 2, in some embodiments, the range finder 320 is further configured to detect a gap between the coating opening 210 and the back roll 100.

Specifically, the range finder 320 may detect the gap between the coating opening 210 and the back roll 100 through laser ranging, ultrasonic ranging, and infrared ranging.

In this way, the range finder 320 detects the gap between the coating opening 210 and the back roll 100. When the gap between the back roll 100 and the coating opening 210 exceeds the specification, a maintainer can perform maintenance in time, thereby ensuring the coating stability and ensuring the normal operation of production.

Continuously referring to FIG. 1 and FIG. 2, in some embodiments, the coating equipment 1000 includes an adjusting mechanism 400 connected to the coating die head 200. The adjusting mechanism 400 is configured to adjust the position of the coating die head 200.

Specifically, the adjusting mechanism 400 may be connected to the coating die head 200 through bolt connection and welding, or may be connected through other manners. For example, a plate connected to the coating die head 200 may be provided, the plate may be linked with the coating die head 200, and the adjusting mechanism 400 adjusts the position of the plate so as to adjust the position of the coating die head 200.

The adjusting mechanism 400 may adjust the position of the coating die head 200 relative to the back roll 100. For example, the adjusting mechanism 400 may adjust the gap of the coating die head 200 relative to the back roll 100. For another example, the adjusting mechanism 400 may adjust the parallelism of the center line of the coating opening 210 relative to the central axis of the back roll 100. The adjusting mechanism 400 may adjust the position of the coating die head 200 through an adjusting bolt, air cylinder driving, and motor driving.

The cavity pressure inside the coating die head 200 may affect the flow rate of slurry ejected from each area of the coating opening 210; therefore, the adjusting mechanism 400 may adjust the flow rate of the slurry ejected from each area of the coating opening 210 by adjusting the cavity pressure inside the coating die head 200, thereby ensuring the coating stability. It may be understood that when the position of the coating die head 200 relative to the back roll 100 changes, although the flow rate of the slurry ejected from each area of the coating opening 210 is different, the position of the coating die head 200 relative to the back roll 100 in each area is different. For example, the distance between the coating die head 200 and two ends of a central axis b of the back roll 100 relative to the back roll 100 is different. Therefore, the spraying weight on the base material may be consistent, that is, the coating stability is ensured.

In this way, when the detection assembly 300 detects that the position of the coating die head 200 relative to the back roll 100 exceeds the specification, the adjusting mechanism 400 may be configured to adjust the position of the coating die head 200, so that the position of the coating die head 200 relative to the back roll 100 returns to the specification, thereby ensuring the coating stability and ensuring the normal operation of production.

Continuously referring to FIG. 1 and FIG. 2, in some embodiments, the coating equipment 1000 includes a machine frame 500 and a bearing plate 600, the coating die head 200 is mounted on the bearing plate 600, the adjusting mechanism 400 is mounted on the machine frame 500 and is connected to the bearing plate 600, and the adjusting mechanism 400 adjusts the degree of freedom of the bearing plate 600 in at least one direction to adjust the degree of freedom of the coating die head 200.

Specifically, the machine frame 500 is a main structural part of the coating die head 200, and the position of the machine frame 500 relative to the coating die head 200 is fixed. The coating die head 200 may be mounted on the bearing plate 600 through bolt connection and clamping connection. The adjusting mechanism 400 may be mounted on the machine frame 500 through bolt connection and clamping connection, and is connected to the bearing plate 600 through bolt connection and welding. The adjusting mechanism 400 may adjust the degree of freedom of the bearing plate 600 in an up-down direction, a left-right direction, and a front-back direction, so that when the gap or the parallelism of the coating die head 200 relative to the back roll 100 changes, a maintainer may adjust the gap or the parallelism to be within the specification by the adjusting mechanism 400, or may adjust the gap or the parallelism to be within the specification by a closed-loop automatic system.

In this way, compared with the method of directly mounting the adjusting mechanism 400 on the coating die head 200, the adjusting mechanism 400 is arranged on the bearing plate 600 and can adjust the degree of freedom of the coating die head 200 without changing the original structure of the coating die head 200.

Continuously referring to FIG. 1 and FIG. 2, in some embodiments, the adjusting mechanism 400 includes at least one of a threaded piece 410 and an automatic control system 420 that are connected to the bearing plate 600.

Specifically, the bearing plate 600 may be provided with a plurality of screw holes, and a plurality of threaded pieces 410 may be arranged in the screw holes. When the detection assembly 300 detects that a size such as the gap or the parallelism of the coating die head 200 relative to the back roll 100 exceeds the specification, on one hand, the detection assembly 300 can warn a maintainer in time, and the maintainer can adjust the size such as the gap or the parallelism of the coating die head 200 relative to the back roll 100 to be within the specification by adjusting the threaded pieces 410; and on the other hand, the detection assembly 300 can send detection information back to a control center, the control center sends an instruction to control the automatic control system 420 to drive the adjusting mechanism 400 to adjust the size such as the gap or the parallelism of the coating die head 200 relative to the back roll 100 to be within the specification. For example, the adjusting mechanism 400 may include a mechanical arm. After the automatic control system 420 receives the instruction, the automatic control system 420 may drive the mechanical arm to drive the bearing plate 600, so that the coating die head 200 mounted on the bearing plate 600 is linked, and the position of the coating die head 200 relative to the back roll 100 changes according to instruction information, thereby ensuring that the gap and the parallelism of the coating die head 200 relative to the back roll 100 are within the specification.

In this way, the threaded piece 410 may be adjusted manually and conveniently, and the manufacturing cost is low. The automatic control system 420 may adjust the position of the coating die head 200 in real time. The automatic control system 420 is more efficient and can ensure the normal operation of production to the greatest extent.

Continuously referring to FIG. 1 and FIG. 2, in one specific embodiment, coating equipment 1000 is provided. The coating equipment 1000 provided by the embodiments of this application includes a back roll 100, a coating die head 200, and a detection assembly 300. The detection assembly 300 may be mounted at a position where the gap and the parallelism of the coating die head 200 relative to the back roll 100 can be detected conveniently, and the adjusting mechanism 400 is arranged at the periphery of the coating die head 200, so that the position of the coating die head 200 relative to the back roll 100 can be adjusted, thereby solving the problem of poor coating stability caused by the fact that the gap and the parallelism of the coating die head 200 relative to the back roll 100 exceed the specification.

Finally, it should be noted that the foregoing embodiments are merely intended for describing the technical solutions of this application, but not for limiting this application. Although this application is described in detail with reference to the foregoing embodiments, those of ordinary skill in the art should understand that they may still make modifications to the technical solutions described in the foregoing embodiments or make equivalent replacements to some or all technical features thereof; and these modifications or replacements do not make the essence of the corresponding technical solution depart from the scope of the technical solutions of the embodiments of this application, and should fall within the scope of claims of this application. In particular, as long as there is no structural conflict, the technical features in the embodiments can be combined in any way. This application is not limited to the specific embodiments disclosed herein, but includes all technical solutions falling within the scope of the claims.

## Claims

1. Coating equipment (1000), **characterized in that** the equipment comprises:
a back roll (100) ;
a coating die head (200), having a coating opening (210) facing towards the back roll (100), the coating opening (210) extending in an axial direction of the back roll (100); and
a detection assembly (300), configured to detect a position of the coating die head (200) relative to the back roll (100) and comprising a level (310) mounted on the coating die head (200);
wherein the detection assembly (300) comprises two range finders (320), and the range finders (320) are configured to detect a parallelism between a center line of the coating opening (210) and a central axis of the back roll (100);
wherein the range finders (320) are arranged on the coating die head (200), and the range finders (320) determine the parallelism by detecting a distance between the back roll (100) and the range finders (320); and
wherein the range finders (320) are arranged on both end parts (220) in a length direction of the coating die head (200), the level (310) is parallel to the length direction of the coating die head (200), and the level (310) is mounted on a surface in the length direction of the coating die head (200).

2. The coating equipment (1000) according to claim 1, **characterized in that** the range finders (320) and the level (310) are respectively located in different directions of the coating die head (200).

3. The coating equipment (1000) according to claim 1, **characterized in that** the range finders (320) are further configured to detect a gap between the coating opening (210) and the back roll (100).

4. The coating equipment (1000) according to claim 1, **characterized in that** the coating equipment (1000) comprises an adjusting mechanism (400) connected to the coating die head (200), and the adjusting mechanism (400) is configured to adjust the position of the coating die head (200).

5. The coating equipment (1000) according to claim 4, **characterized in that** the coating equipment (1000) comprises a machine frame (500) and a bearing plate (600), the coating die head (200) is mounted on the bearing plate (600), the adjusting mechanism (400) is mounted on the machine frame (500) and is connected to the bearing plate (600), and the adjusting mechanism (400) adjusts a degree of freedom in at least one direction of the bearing plate (600) to adjust a degree of freedom of the coating die head (200).

6. The coating equipment (1000) according to claim 5, **characterized in that** the adjusting mechanism (400) comprises at least one of a threaded piece (410) and an automatic control system (420) that are connected to the bearing plate (600).

7. The coating equipment (1000) according to claim 4, **characterized in that** the adjusting mechanism (400) is configured to adjust the gap between the coating die head (200) and the back roll (100).

## Patentansprüche

1. Beschichtungsanlage (1000), **dadurch gekennzeichnet, dass** die Anlage Folgendes umfasst:
eine hintere Rolle (100);
einen Beschichtungsdüsenkopf (200), der eine Beschichtungsöffnung (210) aufweist, die der hinteren Rolle (100) zugewandt ist, wobei sich die Beschichtungsöffnung (210) in einer axialen Richtung der hinteren Rolle (100) erstreckt; und
eine Detektionsanordnung (300), die dazu ausgelegt ist, eine Position des Beschichtungsdüsenkopfes (200) relativ zu der hinteren Rolle (100) zu detektieren, und eine auf dem Beschichtungsdüsenkopf (200) montierte Wasserwaage (310) umfasst;
wobei die Detektionsanordnung (300) zwei Entfernungsmesser (320) umfasst und die Entfernungsmesser (320) dazu ausgelegt sind, eine Parallelität zwischen einer Mittellinie der Beschichtungsöffnung (210) und einer Mittelachse der hinteren Rolle (100) zu detektieren;
wobei die Entfernungsmesser (320) auf dem Beschichtungsdüsenkopf (200) angeordnet sind und die Entfernungsmesser (320) die Parallelität durch Detektieren eines Abstands zwischen der hinteren Rolle (100) und den Entfernungsmessern (320) bestimmen; und
wobei die Entfernungsmesser (320) an beiden Endteilen (220) in einer Längsrichtung des Beschichtungsdüsenkopfes (200) angeordnet sind, wobei die Wasserwaage (310) parallel zur Längsrichtung des Beschichtungsdüsenkopfes (200) ist und die Wasserwaage (310) auf einer Oberfläche in der Längsrichtung des Beschichtungsdüsenkopfes (200) montiert ist.

2. Beschichtungsanlage (1000) nach Anspruch 1, **dadurch gekennzeichnet, dass** die Entfernungsmesser (320) und die Wasserwaage (310) jeweils in unterschiedlichen Richtungen des Beschichtungsdüsenkopfes (200) liegen.

3. Beschichtungsanlage (1000) nach Anspruch 1, **dadurch gekennzeichnet, dass** die Entfernungsmesser (320) ferner dazu ausgelegt sind, einen Spalt zwischen der Beschichtungsöffnung (210) und der hinteren Rolle (100) zu detektieren.

4. Beschichtungsanlage (1000) nach Anspruch 1, **dadurch gekennzeichnet, dass** die Beschichtungsanlage (1000) einen mit dem Beschichtungsdüsenkopf (200) verbundenen Einstellmechanismus (400) umfasst und der Einstellmechanismus (400) dazu ausgelegt ist, die Position des Beschichtungsdüsenkopfes (200) einzustellen.

5. Beschichtungsanlage (1000) nach Anspruch 4, **dadurch gekennzeichnet, dass** die Beschichtungsanlage (1000) einen Maschinenrahmen (500) und eine Lagerplatte (600) umfasst, wobei der Beschichtungsdüsenkopf (200) auf der Lagerplatte (600) montiert ist, der Einstellmechanismus (400) auf dem Maschinenrahmen (500) montiert ist und mit der Lagerplatte (600) verbunden ist und der Einstellmechanismus (400) einen Freiheitsgrad in mindestens einer Richtung der Lagerplatte (600) einstellt, um einen Freiheitsgrad des Beschichtungsdüsenkopfes (200) einzustellen.

6. Beschichtungsanlage (1000) nach Anspruch 5, **dadurch gekennzeichnet, dass** der Einstellmechanismus (400) ein Gewindestück (410) und/oder ein automatisches Steuersystem (420) umfasst, die mit der Lagerplatte (600) verbunden sind.

7. Beschichtungsanlage (1000) nach Anspruch 4, **dadurch gekennzeichnet, dass** der Einstellmechanismus (400) dazu ausgelegt ist, den Spalt zwischen dem Beschichtungsdüsenkopf (200) und der hinteren Rolle (100) einzustellen.

## Revendications

1. Appareil de revêtement (1000), **caractérisé en ce que** l'appareil comprend :
un rouleau arrière (100) ;
une tête de filière de revêtement (200), comportant une ouverture de revêtement (210) faisant face au rouleau arrière (100), l'ouverture de revêtement (210) s'étendant dans une direction axiale du rouleau arrière (100) ; et
un ensemble de détection (300), conçu pour détecter une position de la tête de filière de revêtement (200) par rapport au rouleau arrière (100) et comprenant un niveau (310) monté sur la tête de filière de revêtement (200) ;
l'ensemble de détection (300) comprenant deux télémètres (320), et les télémètres (320) étant conçus pour détecter un parallélisme entre une ligne centrale de l'ouverture de revêtement (210) et un axe central du rouleau arrière (100) ;
les télémètres (320) étant disposés sur la tête de filière de revêtement (200), et les télémètres (320) déterminant le parallélisme en détectant une distance entre le rouleau arrière (100) et les télémètres (320) ; et
les télémètres (320) étant disposés sur les deux parties d'extrémité (220) dans le sens de la longueur de la tête de filière de revêtement (200), le niveau (310) étant parallèle au sens de la longueur de la tête de filière de revêtement (200), et le niveau (310) étant monté sur une surface dans le sens de la longueur de la tête de filière de revêtement (200).

2. Appareil de revêtement (1000) selon la revendication 1, **caractérisé en ce que** les télémètres (320) et le niveau (310) sont situés respectivement dans des directions différentes de la tête de filière de revêtement (200).

3. Appareil de revêtement (1000) selon la revendication 1, **caractérisé en ce que** les télémètres (320) sont en outre conçus pour détecter un espace entre l'ouverture de revêtement (210) et le rouleau arrière (100).

4. Appareil de revêtement (1000) selon la revendication 1, **caractérisé en ce que** l'appareil de revêtement (1000) comprend un mécanisme de réglage (400) relié à la tête de filière de revêtement (200), et **en ce que** le mécanisme de réglage (400) est conçu pour régler la position de la tête de filière de revêtement (200).

5. Appareil de revêtement (1000) selon la revendication 4, **caractérisé en ce que** l'appareil de revêtement (1000) comprend un bâti de machine (500) et une plaque d'appui (600), la tête de filière de revêtement (200) étant montée sur la plaque d'appui (600), le mécanisme de réglage (400) étant monté sur le bâti de machine (500) et étant relié à la plaque d'appui (600), et le mécanisme de réglage (400) réglant un degré de liberté dans au moins une direction de la plaque d'appui (600) pour régler un degré de liberté de la tête de filière de revêtement (200).

6. Appareil de revêtement (1000) selon la revendication 5, **caractérisé en ce que** le mécanisme de réglage (400) comprend au moins l'un d'une pièce filetée (410) et d'un système de commande automatique (420) qui sont reliés à la plaque d'appui (600).

7. Appareil de revêtement (1000) selon la revendication 4, **caractérisé en ce que** le mécanisme de réglage (400) est conçu pour régler l'espace entre la tête de filière de revêtement (200) et le rouleau arrière (100).
